# EUROPEAN PATENT APPLICATION

(11) **EP 4 342 933 A1**
(43) Date of publication of application: **27.03.2024**
(21) Application number: 22804701.5
(22) Date of filing: 18.05.2022
(51) Int. Cl.: C08J 3/02, B05D 3/12, B29B 17/02, C08G 63/88, C08J 3/05

(54) **METHOD FOR IMPROVING DISPERSIBILITY OF CRYSTALLINE RESIN HAVING HYDROPHILIC GROUP INTO NEUTRAL WATER**

(30) Priority: 18.05.2021 JP 2021084068
(71) Applicant: Kao Corporation, Chuo-ku Tokyo 103-8210 (JP)
(72) Inventor: SASAKI,Keiji, Wakayama-shi, Wakayama 640-8580 (JP); YOSHIMURA,Tadanori, Wakayama-shi, Wakayama 640-8580 (JP); NORO,Takahiro, Wakayama-shi, Wakayama 640-8580 (JP); NOJIMA,Yui, Wakayama-shi, Wakayama 640-8580 (JP)
(74) Representative: Hoffmann Eitle
(86) International application number: PCT/JP2022/020606
(87) International publication number: WO 2022/244790

(57) **Abstract**

The present invention is a method for improving dispersibility of a crystalline resin having a hydrophilic group into neutral water, the method comprising an amorphization step of amorphizing a crystalline resin having a hydrophilic group. According to the present invention, it is possible to provide a method for improving dispersibility of a water-soluble resin having excellent moisture resistance into neutral water.

## Description

### TECHNICAL FIELD

The present invention relates to a method for improving dispersibility of a crystalline resin having a hydrophilic group into neutral water.

### BACKGROUND ART

Some applications of resins may require rapid removal of resins after fulfilling their roles. Conceivable ways of removing a resin include dissolving a resin in a solvent or an alkaline aqueous solution (see, for example, JP-A-2001-131484) .

### SUMMARY OF THE INVENTION

The present invention is a method for improving dispersibility of a crystalline resin having a hydrophilic group into neutral water, the method comprising an amorphization step of amorphizing a crystalline resin having a hydrophilic group.

### DETAILED DESCRIPTION OF THE INVENTION

Removing a resin with an alkaline aqueous solution is not preferable from the viewpoint of working environment and safety. A conceivable solution to this problem is use of a water-soluble resin that dissolves in neutral water such as polyvinyl alcohol, but conventional water-soluble resins have poor moisture resistance, and therefore if used in an environment with relatively high humidity, conventional water-soluble resins may be damaged by moisture in the environment to be incapable of playing their roles.

In order to solve the above problems, it is conceivable to use a water-soluble resin having excellent moisture resistance such that the water-soluble resin is less likely to be damaged even when used in an environment with relatively high humidity. However, in order to remove such a water-soluble resin with neutral water, the neutral water is often required to have a high temperature, and thus there is a problem from the viewpoint of safety and energy saving.

The present invention provides a method for improving dispersibility of a water-soluble resin having excellent moisture resistance into neutral water.

The present invention is a method for improving dispersibility of a crystalline resin having a hydrophilic group into neutral water, the method comprising an amorphization step of amorphizing a crystalline resin having a hydrophilic group.

According to the present invention, it is possible to provide a method for improving dispersibility of a water-soluble resin having excellent moisture resistance into neutral water.

One embodiment according to the present invention is explained below.

### <Method for improving dispersibility of crystalline resin having hydrophilic group into neutral water>

The method for improving dispersibility of a crystalline resin having a hydrophilic group into neutral water of the present embodiment (hereinafter, also simply referred to as method for improving water dispersibility) includes an amorphization step of amorphizing a crystalline resin having a hydrophilic group. In the present description, the phrase "dispersion of a crystalline resin having a hydrophilic group into neutral water" means dispersion of a crystalline resin having a hydrophilic group into neutral water by dissolution of the crystalline resin having a hydrophilic group in neutral water and by collapse of a molded body of the crystalline resin having a hydrophilic group in the neutral water. The phrase "dispersibility of a crystalline resin having a hydrophilic group into neutral water" means ease of dispersion of a crystalline resin having a hydrophilic group into neutral water by ease of dissolution of the crystalline resin having a hydrophilic group in neutral water and by collapse of a molded body of the crystalline resin having a hydrophilic group in the neutral water. According to the method for improving water dispersibility of the present embodiment, the dispersibility of a water-soluble resin having excellent moisture resistance into neutral water can be improved. The reason why the method for improving water dispersibility exhibits such an effect is not clear, but is presumed as follows.

A crystalline resin having a hydrophilic group immediately after melt synthesis is considered to have high moisture resistance by aggregation and crystallization of the hydrophilic group. When a crystalline resin having a hydrophilic group after molding is heated to a temperature equal to or higher than the melting point of the crystalline resin, it is considered that the crystal is melted, the molecular mobility is increased, the hydrophilic group is re-aggregated, thus the crystal of the hydrophobic portion is lost, and as a result, the dispersibility into neutral water can be improved.

### [Amorphization step]

The amorphization step is a step of amorphizing the crystalline resin.

The crystalline resin having a hydrophilic group is not particularly limited as long as it is a resin having crystallinity and dispersibility into neutral water. Examples of the crystalline resin having a hydrophilic group include a crystalline water-soluble resin that includes a monomer unit A having a hydrophilic group other than hydrophilic groups constituting polymerization for generation of the crystalline resin having a hydrophilic group (hereinafter, also simply referred to as hydrophilic group) and a monomer unit B not having the hydrophilic group.

Examples of the neutral water include water and an aqueous solution having a pH of 6 to 8, preferably 6.5 to 7.5 at 25°C. Specific examples of the neutral water include deionized water, pure water, tap water, and industrial water, and deionized water or tap water is preferable from the viewpoint of availability. The neutral water can contain other components such as a water-soluble organic solvent and a surfactant. Examples of the water-soluble organic solvent include lower alcohols such as methanol, ethanol, and 2-propanol, glycol ethers such as propylene glycol monomethyl ether, ethylene glycol monoethyl ether, ethylene glycol mono-tertiary butyl ether, and diethylene glycol monobutyl ether, and ketones such as acetone and methyl ethyl ketone. Examples of the surfactant include anionic surfactants such as an alkyl sulphate ester salt, an alkyl ether sulphate ester salt, an olefin sulfonate, and an alkyl ether carboxylate; cationic surfactants such as alkyltrimethylammonium salt; and nonionic surfactants such as polyoxyethylene alkyl ether and alkyl glycoside.

Examples of the crystalline resin having a hydrophilic group include a water-soluble polyester resin, a water-soluble polyamide resin, a water-soluble polyimide resin, a water-soluble acrylic resin, a water-soluble polyurethane resin, a water-soluble polyallylamine resin, a water-soluble phenol resin, a water-soluble epoxy resin, a water-soluble phenoxy resin, a water-soluble urea resin, a water-soluble melamine resin, a polyvinyl alcohol resin, and modified products of these resins. These can be used singly or in combination of two or more types thereof. Among them, from the viewpoint of exhibiting the effects of the present invention, one or more selected from the group consisting of a water-soluble polyester resin, a water-soluble polyamide resin, and a water-soluble acrylic resin are preferable, and a water-soluble polyester resin is more preferable.

### [Monomer unit A]

The monomer unit A has a hydrophilic group. The monomer from which the monomer unit A is derived is referred to as a monomer A.

The hydrophilic group is, for example, one or more hydrophilic groups selected from the group consisting of cationic groups, neutral groups, and anionic groups in order to impart dispersibility into neutral water. Among these groups, one or more hydrophilic groups selected from the group consisting of anionic groups are preferable, and sulfonate groups are more preferable, from the viewpoint of imparting dispersibility into neutral water.

The sulfonate group is preferably a sulfonate group represented by -SO₃M³ (M³ represents a counterion of a sulfonic acid group that constitutes the sulfonate group, and from the viewpoint of imparting dispersibility into neutral water, M³ is preferably one or more selected from the group consisting of a metal ion and an ammonium ion, more preferably one or more selected from the group consisting of a metal ion, still more preferably one or more selected from the group consisting of an alkali metal ion and an alkaline earth metal ion, still more preferably one or more selected from the group consisting of an alkali metal ion, still more preferably one or more selected from the group consisting of a sodium ion and a potassium ion, and still more preferably a sodium ion.) from the viewpoint of imparting dispersibility into neutral water and the viewpoint of ease of a polymerization reaction at the time of manufacturing the crystalline resin having a hydrophilic group.

The monomer unit A is not particularly limited as long as it is a monomer unit having the hydrophilic group, but from the viewpoints of imparting dispersibility into neutral water and improving the moisture resistance, a dicarboxylic acid monomer unit having the hydrophilic group is preferable.

The monomer A is preferably one or more selected from the group consisting of carboxylic acids having the hydrophilic group, amines, amino acids, and their salts, and more preferably a carboxylic acid having the hydrophilic group or its salt, from the viewpoints of imparting dispersibility into neutral water, improving the moisture resistance, and ease of a polymerization reaction at the time of manufacturing the crystalline resin having a hydrophilic group. Among the carboxylic acids and their salts, aromatic carboxylic acids having the hydrophilic group and their salts are preferable, and one or more selected from the group consisting of sulfonate group-containing aromatic dicarboxylic acids and their salts are more preferable from the same viewpoints. Among them, one or more selected from the group consisting of sulfophthalic acids, sulfonaphthalenedicarboxylic acid, and their salts are preferable, one or more selected from the group consisting of sulfophthalic acids and their salts are more preferable, one or more selected from the group consisting of sulfoisophthalic acids, sulfoterephthalic acids, and their salts are still more preferable, and 5-sulfoisophthalic acid and its salts are still even more preferable from the same viewpoints.

The content of the hydrophilic group in the crystalline resin having a hydrophilic group is preferably 0.4 mmol/g or more, more preferably 0.6 mmol/g or more, and still more preferably 0.7 mmol/g or more from the viewpoint of imparting dispersibility into neutral water, and is preferably 3.0 mmol/g or less, more preferably 2.0 mmol/g or less, still more preferably 1.5 mmol/g or less, and still more preferably 1.0 mmol/g or less from the viewpoint of improving the moisture resistance.

The percentage of the monomer unit A based on a total of all monomer units of the crystalline resin having a hydrophilic group is 5 mol% or more, preferably 7 mol% or more, and more preferably 10 mol% or more from the viewpoint of imparting dispersibility into neutral water, and is 35 mol% or less, preferably 30 mol% or less, more preferably 20 mol% or less, and more preferably 15 mol% or less from the viewpoint of improving the moisture resistance.

### [Monomer unit B]

The monomer unit B has no hydrophilic group. The monomer from which the monomer unit B is derived is referred to as a monomer B. The monomer unit B is preferably a dicarboxylic acid monomer unit having no hydrophilic group (hereinafter, also referred to as a dicarboxylic acid monomer unit B) from the viewpoint of improving the moisture resistance.

The dicarboxylic acid from which the dicarboxylic acid monomer unit B is derived is more preferably one or more selected from the group consisting of an aromatic dicarboxylic acid having no hydrophilic group and an aliphatic dicarboxylic acid having no hydrophilic group, and more preferably one or more selected from the group consisting of an aromatic dicarboxylic acid having no hydrophilic group from the viewpoint of improving the moisture resistance, and the viewpoint of ease of a polymerization reaction at the time of manufacturing the crystalline resin having a hydrophilic group.

Examples of the aromatic dicarboxylic acid having no hydrophilic group include one or more selected from the group consisting of benzenedicarboxylic acid, furandicarboxylic acid, and naphthalenedicarboxylic acid. Among them, one or more selected from the group consisting of terephthalic acid, isophthalic acid, and 2,6-naphthalenedicarboxylic acid are preferable from the viewpoint of improving the moisture resistance.

Examples of the aliphatic dicarboxylic acid having no hydrophilic group include one or more selected from the group consisting of malonic acid, succinic acid, glutaric acid, adipic acid, sebacic acid, 1,4-cyclohexanedicarboxylic acid, and 1,3-adamantanedicarboxylic acid. Among them, adipic acid is preferable from the viewpoint of improving the moisture resistance.

The percentage of the amount of a monomer unit derived from the aromatic dicarboxylic acid having no hydrophilic group based on a total of the amount of the dicarboxylic acid monomer unit B is preferably 20 mol% or more, more preferably 30 mol% or more, and still more preferably 40 mol% or more from the viewpoint of improving the moisture resistance.

The percentage of the amount of the monomer unit derived from the aromatic dicarboxylic acid having no hydrophilic group based on a total of the amount of the dicarboxylic acid monomer unit B is preferably 100 mol% or less, more preferably 80 mol% or less, and still more preferably 60 mol% or less from the viewpoint of imparting dispersibility into neutral water.

The percentage of the amount of substance of the monomer unit B based on a total of the amount of substance of all monomer units in the crystalline resin having a hydrophilic group is preferably 15 mol% or more, more preferably 25 mol% or more, still more preferably 30 mol% or more, and still more preferably 35 mol% or more from the viewpoint of improving the moisture resistance, and is preferably 45 mol% or less, more preferably 42 mol% or less, and still more preferably 40 mol% or less from the viewpoint of imparting dispersibility into neutral water. Herein, a composition of the crystalline resin is measured by the method described in EXAMPLES.

The molar ratio of the monomer unit A to the monomer unit B in the crystalline resin having a hydrophilic group (the monomer unit A/the monomer unit B) is preferably 10/90 or more, more preferably 15/85 or more, and still more preferably 20/80 or more from the viewpoint of imparting dispersibility into neutral water, and preferably 70/30 or less, more preferably 60/40 or less, still more preferably 40/60 or less, and still more preferably 30/70 or less from the viewpoint of improving the moisture resistance.

The crystalline resin having a hydrophilic group has a melting point Tm of preferably 70°C or more, more preferably 80°C or more, and still more preferably 90°C or more from the viewpoint of improving heat resistance at the time of use, and preferably 200°C or less, more preferably 160°C or less, and still more preferably 150°C or less from the viewpoint of imparting dispersibility into neutral water. In the present description, the melting point Tm of the crystalline resin is measured by the method described in EXAMPLES.

The crystalline resin having a hydrophilic group has a glass transition temperature of preferably -10°C or more, more preferably -5°C or more, and still more preferably 0°C or more from the viewpoint of improving heat resistance at the time of use, and preferably 180°C or less, more preferably 100°C or less, still more preferably 60°C or less, and still more preferably 50°C or less from the viewpoint of imparting dispersibility into neutral water. In the present description, the glass transition temperature of the crystalline resin is measured by the method described in EXAMPLES.

The weight average molecular weight of the crystalline resin having a hydrophilic group is preferably 1,000 or more, more preferably 3,000 or more, and still more preferably 4,000 or more from the viewpoint of improving the moisture resistance, and is preferably 80,000 or less, more preferably 50,000 or less, and still more preferably 30,000 or less from the viewpoint of imparting dispersibility into neutral water. In the present specification, the weight average molecular weight is measured by the method described in EXAMPLES.

### (Diol monomer unit C)

When the crystalline resin having a hydrophilic group is a water-soluble polyester resin, the water-soluble resin includes a diol monomer unit C other than the monomer unit A and the monomer unit B. The diol from which the diol monomer unit C is derived is also referred to as a diol C.

As the diol C, an aliphatic diol, an aromatic diol and the like can be used, and an aliphatic diol is preferable from the viewpoint of availability of raw materials of the water-soluble polyester resin.

The carbon number of the diol C is preferably 2 or more from the viewpoint of imparting dispersibility into neutral water, and is preferably 31 or less, more preferably 25 or less, still more preferably 20 or less, and still more preferably 15 or less from the viewpoint of improving the moisture resistance.

Examples of the aliphatic diol include one or more selected from the group consisting of a chain diol and a cyclic diol, and a chain diol is preferable from the viewpoint of availability of raw materials and a cyclic diol is preferable from the viewpoint of improving water resistance.

The percentage of a total of a monomer unit derived from the cyclic diol based on a total of the diol monomer unit C is preferably 40 mol% or more, more preferably 50 mol% or more, and still more preferably 60 mol% or more from the viewpoint of imparting dispersibility into neutral water, and is preferably 90 mol% or less, more preferably 85 mol% or less, and still more preferably 80 mol% or less from the viewpoint of availability of raw materials.

The carbon number of the chain diol is preferably 2 or more from the viewpoint of improving the moisture resistance, and is preferably 20 or less, still more preferably 15 or less, and still more preferably 6 or less from the viewpoint of imparting dispersibility into neutral water.

The chain diol is preferably an alkane diol, more preferably one or more selected from the group consisting of ethylene glycol, propanediol, butanediol, neopentyl glycol, pentanediol, hexanediol, diethylene glycol, triethylene glycol, polyethylene glycol, dipropylene glycol, and polypyrene glycol, more preferably one or more selected from the group consisting of ethylene glycol, 1,2-propanediol, 1,3-propanediol, and triethylene glycol, and still more preferably 1,3-propanediol or ethylene glycol from the viewpoint of improving the moisture resistance and the viewpoint of imparting dispersibility into neutral water.

The carbon number of the cyclic diol is preferably 3 or more, more preferably 4 or more, and still more preferably 6 or more from the viewpoint of improving the moisture resistance, and is preferably 31 or less, still more preferably 20 or less, and still more preferably 15 or less from the viewpoint of imparting dispersibility into neutral water.

The cyclic diol is preferably one or more selected from the group consisting of cyclohexanedimethanol, hydrogenated bisphenol A, isosorbide, bisphenoxyethanolfluorene, bisphenol fluorene, biscresoxyethanolfluorene, and biscresol fluorene, and more preferably 1,4-cyclohexanedimethanol from the viewpoint of improving the moisture resistance and the viewpoint of imparting dispersibility into neutral water.

The water-soluble polyester resin can have monomer units other than the dicarboxylic acid monomer unit A, the dicarboxylic acid monomer unit B, and the diol monomer unit C as long as the effects of the present embodiment are not impaired.

The method for producing the water-soluble polyester resin is not particularly limited, and a conventionally known method for producing a polyester resin can be applied.

In the amorphization step, the method of amorphizing the crystalline resin having a hydrophilic group is preferably a method of heat-treating the crystalline resin having a hydrophilic group. That is, the amorphization step preferably includes a heat treatment step of heat-treating the crystalline resin having a hydrophilic group.

In the heat treatment step, the crystalline resin having a hydrophilic group is heat-treated at a temperature, relative to the melting point Tm of the crystalline resin having a hydrophilic group, of preferably Tm + 10°C or more, more preferably Tm + 20°C or more, and still more preferably Tm + 30°C or more from the viewpoint of efficiently amorphizing the crystalline resin having a hydrophilic group, and preferably Tm + 70°C or less, more preferably Tm + 60°C or less, and still more preferably Tm + 50°C or less from the viewpoint of energy saving.

In the heat treatment step, the crystalline resin having a hydrophilic group is heat-treated at a temperature of preferably 110°C or more, more preferably 120°C or more, and still more preferably 140°C or more from the viewpoint of efficiently amorphizing the crystalline resin having a hydrophilic group, and preferably 220°C or less, more preferably 190°C or less, and still more preferably 160°C or less from the viewpoint of energy saving.

In the heat treatment step, the heat treatment time of the crystalline resin having a hydrophilic group is preferably 10 seconds or longer, more preferably 30 seconds or longer, and still more preferably 45 seconds or longer from the viewpoint of efficiently amorphizing the crystalline resin having a hydrophilic group, and preferably 15 minutes or shorter, more preferably 10 minutes or shorter, still more preferably less than 3 minutes, and still more preferably 2 minutes or shorter from the same viewpoint.

In the heat treatment step, the crystalline resin having a hydrophilic group is sheared at the time of heat treatment at a shear rate of preferably 1 cycle/second or less, more preferably 0.1 cycles/second or less, and still more preferably 0.01 cycles/second or less from the viewpoint of efficiently amorphizing the crystalline resin having a hydrophilic group.

In the heat treatment step, the crystalline resin having a hydrophilic group is centrifuged while heated at an extrusion rate of preferably 100 m/min or less, more preferably 10 m/min or less, still more preferably 1 m/min or less, and still even more preferably 0.1 m/min or less from the viewpoint of efficiently amorphizing the crystalline resin having a hydrophilic group.

In the heat treatment step, the crystalline resin having a hydrophilic group is heat-treated preferably under a non-shear condition in which the crystalline resin having a hydrophilic group is not sheared, from the viewpoint of efficiently amorphizing the crystalline resin having a hydrophilic group.

The way of heat-treating in the heat treatment step is not particularly limited, and a known general heat treatment method can be used.

### <Method for dispersing crystalline resin having hydrophilic group into neutral water>

The method for dispersing a crystalline resin having a hydrophilic group into neutral water (hereinafter, also simply referred to as dispersion method) of the present embodiment is a method that includes improving water solubility of the crystalline resin having a hydrophilic group by the method for improving water dispersibility and then dispersing the crystalline resin having a hydrophilic group into neutral water.

Examples of the dispersion method include a method in which the crystalline resin having a hydrophilic group is brought into contact with the neutral water.

In the dispersion method, the amount of the neutral water used is preferably 10 times by mass or more, and more preferably 20 times by mass or more of the amount of the crystalline resin having a hydrophilic group from the viewpoint of dispersing the crystalline resin having a hydrophilic group, and is preferably 10000 times by mass or less, more preferably 5000 times by mass or less, still more preferably 1000 times by mass or less, and still even more preferably 100 times by mass or less of the amount of the crystalline resin having a hydrophilic group from the viewpoint of reducing the environmental load.

In the dispersion method, the crystalline resin having a hydrophilic group is brought into contact with water for preferably 5 minutes or more from the viewpoint of dispersing the crystalline resin having a hydrophilic group, and preferably 30 minutes or less, more preferably 20 minutes or less, and still more preferably 10 minutes or less from the viewpoint of energy saving.

In the dispersion method, the temperature of the neutral water is preferably 30°C or more, and more preferably 40°C or more from the viewpoint of dispersing the crystalline resin having a hydrophilic group, and is preferably 70°C or less, and more preferably 60°C or less from the viewpoint of reducing the environmental load.

The crystalline resin having a hydrophilic group can be a used resin. In a case where the crystalline resin having a hydrophilic group is contained in a printed matter, an adhesive, a pressure-sensitive adhesive, or a coating, the printed matter, the adhesive, the pressure-sensitive adhesive, or the coating containing the crystalline resin having a hydrophilic group can be removed by the method for improving water dispersibility or by the dispersion method.

### <Method for removing printed matter>

The method for removing a printed matter of the present embodiment includes the method for improving dispersibility of a crystalline resin having a hydrophilic group into neutral water or the method for dispersing a crystalline resin having a hydrophilic group into neutral water.

### <Method for removing adhesive>

The method for removing an adhesive of the present embodiment includes the method for improving dispersibility of a crystalline resin having a hydrophilic group into neutral water or the method for dispersing a crystalline resin having a hydrophilic group into neutral water.

### <Method for removing pressure-sensitive adhesive>

The method for removing a pressure-sensitive adhesive of the present embodiment includes the method for improving dispersibility of a crystalline resin having a hydrophilic group into neutral water or the method for dispersing a crystalline resin having a hydrophilic group into neutral water.

### <Method for removing coating>

The method for removing a coating of the present embodiment includes the method for improving dispersibility of a crystalline resin having a hydrophilic group into neutral water or the method for dispersing a crystalline resin having a hydrophilic group into neutral water.

The present specification further discloses the following embodiments.

<1> A method for improving dispersibility of a crystalline resin having a hydrophilic group into neutral water, the method comprising an amorphization step of amorphizing a crystalline resin having a hydrophilic group.
<2> The method according to <1>, wherein the crystalline resin having a hydrophilic group has a melting point Tm of preferably 70°C or more, more preferably 80°C or more, and still more preferably 90°C or more.
<3> The method according to <1> or <2>, wherein the crystalline resin having a hydrophilic group has a melting point Tm of preferably 200°C or less, more preferably 160°C or less, and still more preferably 150°C or less.
<4> The method according to any one of <1> to <3>, wherein the crystalline resin having a hydrophilic group has a glass transition temperature of preferably -10°C or more, more preferably -5°C or more, and still more preferably 0°C or more.
<5> The method according to any one of <1> to <4>, wherein the crystalline resin having a hydrophilic group has a glass transition temperature of preferably 100°C or less, more preferably 60°C or less, and still more preferably 50°C or less.
<6> The method according to any one of <1> to <5>, wherein the crystalline resin having a hydrophilic group has a content of the hydrophilic group of preferably 0.4 mmol/g or more, more preferably 0.6 mmol/g or more, and still more preferably 0.7 mmol/g or more.
<7> The method according to any one of <1> to <6>, wherein the crystalline resin having a hydrophilic group has a content of the hydrophilic group of preferably 3.0 mmol/g or less, more preferably 2.0 mmol/g or less, still more preferably 1.5 mmol/g or less, and still more preferably 1.0 mmol/g or less.
<8> The method according to any one of <1> to <7>, wherein the crystalline resin having a hydrophilic group is a crystalline water-soluble resin that includes a monomer unit A having a hydrophilic group and a monomer unit B not having the hydrophilic group.
<9> The method according to any one of <1> to <8>, wherein a molar ratio of the monomer unit A to the monomer unit B (the monomer unit A/the monomer unit B) in the crystalline resin having a hydrophilic group is preferably 10/90 or more, more preferably 15/85 or more, and still more preferably 20/80 or more.
<10> The method according to any one of <1> to <9>, wherein a molar ratio of the monomer unit A to the monomer unit B (the monomer unit A/the monomer unit B) in the crystalline resin having a hydrophilic group is preferably 70/30 or less, more preferably 60/40 or less, still more preferably 40/60 or less, and still more preferably 30/70 or less.
<11> The method according to any one of <1> to <10>, wherein the crystalline resin having a hydrophilic group has a weight average molecular weight of preferably 1000 or more, more preferably 3000 or more, and still more preferably 4000 or more.
<12> The method according to any one of <1> to <11>, wherein the crystalline resin having a hydrophilic group has a weight average molecular weight of preferably 80000 or less, more preferably 50000 or less, and still more preferably 30000 or less.
<13> The method according to any one of <1> to <12>, wherein the amorphization step includes a heat treatment step of heat-treating the crystalline resin having a hydrophilic group.
<14> The method according to <13>, wherein in the heat treatment step, the crystalline resin having a hydrophilic group is heat-treated under a non-shear condition.
<15> The method according to <13> or <14>, wherein the crystalline resin having a hydrophilic group is heat-treated in the heat treatment step at a temperature of preferably Tm + 10°C or more, more preferably Tm + 20°C or more, and still more preferably Tm + 30°C or more, Tm representing the melting point of the crystalline resin having a hydrophilic group.
<16> The method according to any one of <13> to <15>, wherein the crystalline resin having a hydrophilic group is heat-treated in the heat treatment step at a temperature of preferably Tm + 70°C or less, more preferably Tm + 60°C or less, and still more preferably Tm + 50°C or less, Tm representing the melting point of the crystalline resin having a hydrophilic group.
<17> The method according to any one of <13> to <16>, wherein the crystalline resin having a hydrophilic group is heat-treated in the heat treatment step at a temperature of preferably 110°C or more, more preferably 120°C or more, and still more preferably 140°C or more.
<18> The method according to any one of <13> to <17>, wherein the crystalline resin having a hydrophilic group is heat-treated in the heat treatment step at a temperature of preferably 220°C or less, more preferably 190°C or less, and still more preferably 160°C or less.
<19> The method according to any one of <1> to <18>, wherein the crystalline resin having a hydrophilic group has one or more hydrophilic groups selected from the group consisting of preferably anionic groups, and more preferably sulfonate groups.
<20> The method according to any one of <1> to <19>, wherein the crystalline resin having a hydrophilic group is a water-soluble polyester resin.
<21> A method for improving dispersibility of a crystalline resin having a hydrophilic group into neutral water, the method comprising an amorphization step of amorphizing a crystalline resin having a hydrophilic group,
   wherein the crystalline resin having a hydrophilic group has a melting point of 70°C or more and 200°C or less, the melting point represented by Tm,
   wherein the crystalline resin having a hydrophilic group has a glass transition temperature of -10°C or more and 100°C or less,
   wherein the crystalline resin having a hydrophilic group has a content of the hydrophilic group of 0.4 mmol/g or more and 3.0 mmol/g or less,
   wherein the crystalline resin having a hydrophilic group is a crystalline water-soluble resin that includes a monomer unit A having a hydrophilic group and a monomer unit B not having the hydrophilic group,
   wherein a molar ratio of the monomer unit A to the monomer unit B (the monomer unit A/the monomer unit B) in the crystalline resin having a hydrophilic group is 10/90 or more and 70/30 or less,
   wherein the crystalline resin having a hydrophilic group has a weight average molecular weight of 1000 or more and 80000 or less,
   wherein the amorphization step includes a heat treatment step of heat-treating the crystalline resin having a hydrophilic group,
   wherein the crystalline resin having a hydrophilic group is heat-treated under a non-shear condition,
   wherein the crystalline resin having a hydrophilic group is heat-treated in the heat treatment step at a temperature of Tm + 10°C or more and Tm + 70°C or less, Tm representing the melting point of the crystalline resin having a hydrophilic group,
   wherein the crystalline resin having a hydrophilic group has one or more hydrophilic groups selected from the group consisting of sulfonate groups,
   wherein the crystalline resin having a hydrophilic group is a water-soluble polyester resin.
<22> The method according to any one of <1> to <21>, wherein the crystalline resin having a hydrophilic group is a used resin.
<23> The method according to any one of <1> to <22>, wherein the crystalline resin having a hydrophilic group is contained in a printed matter, an adhesive, a pressure-sensitive adhesive, or a coating.
<24> A method for dispersing a crystalline resin having a hydrophilic group into neutral water, the method comprising:
   improving dispersibility of a crystalline resin having a hydrophilic group into neutral water by the method according to any one of <1> to <23>; and
   then dispersing the crystalline resin having a hydrophilic group into neutral water.
<25> A method for removing a coating, comprising the method according to any one of <1> to <24>.

The pressure is expressed in an absolute pressure. "Normal pressure" refers to 101.3 kPa.

### <Synthesis example of crystalline resin having hydrophilic group>

### [Synthesis example of crystalline resin 1 having hydrophilic group]

Into a 2 L stainless steel separable flask with a lid, 120.00 g of dimethyl terephthalate (manufactured by SK petrochemical), 107.64 g of dimethyl adipate (manufactured by Tokyo Chemical Industry Co., Ltd.), 109.83 g of dimethyl sodium 5-sulfoisophthalate (manufactured by Sanyo Chemical Industries, Ltd.), 174.66 g of 1,4-cyclohexanedimethanol (manufactured by FUJIFILM Wako Pure Chemical Corporation), 124.13 g of 1,3-propanediol (manufactured by Tokyo Chemical Industry Co., Ltd.), 252.4 mg of tetrabutyl orthotitanate (manufactured by Tokyo Chemical Industry Co., Ltd.), and 675.7 mg of sodium acetate (manufactured by FUJIFILM Wako Pure Chemical Corporation) were put, a nitrogen inlet tube, an anchor type stirring blade, a Dean-Stark tube, and a Liebig condenser were attached, and the flask was placed in a mantle heater. The flask was heated while the mixture in the flask was stirred under normal pressure at a nitrogen flow rate of 0.5 L/min until the temperature of the flask wall reached 160°C. Thereafter, the temperature was raised to 220°C over 25 minutes, and the mixture was reacted under normal pressure for 6.5 hours while the resulting distillate was taken out from the Dean-Stark apparatus. Thereafter, the pressure was reduced to 1.5 kPa while the temperature was raised to 240°C over 20 minutes, and then the mixture was reacted for 6.5 hours while the resulting distillate was taken out. The flask was allowed to cool to room temperature to obtain 438.68 g of a crystalline resin 1 having a hydrophilic group.

### [Synthesis example of crystalline resin 2 having hydrophilic group]

A reaction was performed under the same conditions as in the synthesis example of the crystalline resin 1 except that the raw materials described in Table 1 were used and after reducing the pressure to 1.5 kPa, the mixture was reacted for 5.5 hours while the resulting distillate was taken out, and thus 396.39 g of a crystalline resin 2 having a hydrophilic group was obtained.

### [Synthesis example of crystalline resin 3 having hydrophilic group]

A reaction was performed under the same conditions as in the synthesis example of the crystalline resin 1 except that the raw materials described in Table 1 were used and after reducing the pressure to 1.5 kPa, the mixture was reacted for 6 hours while the resulting distillate was taken out, and thus 378.84 g of a crystalline resin 3 having a hydrophilic group was obtained.

### [Synthesis example of crystalline resin 4 having hydrophilic group]

A reaction was performed under the same conditions as in the synthesis example of the crystalline resin 1 except that the raw materials described in Table 1 were used and after reducing the pressure to 1.5 kPa, the mixture was reacted for 8.5 hours while the resulting distillate was taken out, and thus 400.06 g of a crystalline resin 4 having a hydrophilic group was obtained.

### [Synthesis example of crystalline resin 5 having hydrophilic group]

A reaction was performed under the same conditions as in the synthesis example of the crystalline resin 1 except that the raw materials described in Table 1 were used and after reducing the pressure to 1.5 kPa, the mixture was reacted for 6.5 hours while the resulting distillate was taken out, and thus 412.94 g of a crystalline resin 5 having a hydrophilic group was obtained.

### [Synthesis example of crystalline resin 6 having hydrophilic group]

A reaction was performed under the same conditions as in the synthesis example of the crystalline resin 1 except that the raw materials described in Table 1 were used and after reducing the pressure to 1.5 kPa, the mixture was reacted for 3 hours while the resulting distillate was taken out, and thus 286.81 g of a crystalline resin 6 having a hydrophilic group was obtained.

### [Synthesis example of crystalline resin 7 having hydrophilic group]

A reaction was performed under the same conditions as in the synthesis example of the crystalline resin 1 except that the raw materials described in Table 1 were used and after reducing the pressure to 1.5 kPa, the mixture was reacted for 15.5 hours while the resulting distillate was taken out, and thus 274.41 g of a crystalline resin 7 having a hydrophilic group was obtained.

### [Synthesis example of crystalline resin 8 having hydrophilic group]

A reaction was performed under the same conditions as in the synthesis example of the crystalline resin 1 except that the raw materials described in Table 1 were used and after reducing the pressure to 1.5 kPa, the mixture was reacted for 8 hours while the resulting distillate was taken out, and thus 321.71 g of a crystalline resin 8 having a hydrophilic group was obtained.

### [Synthesis example of crystalline resin 9 having hydrophilic group]

A reaction was performed under the same conditions as in the synthesis example of the crystalline resin 1 except that the raw materials described in Table 1 were used and after reducing the pressure to 1.5 kPa, the mixture was reacted for 7 hours while the resulting distillate was taken out, and thus 362.20 g of a crystalline resin 9 having a hydrophilic group was obtained.

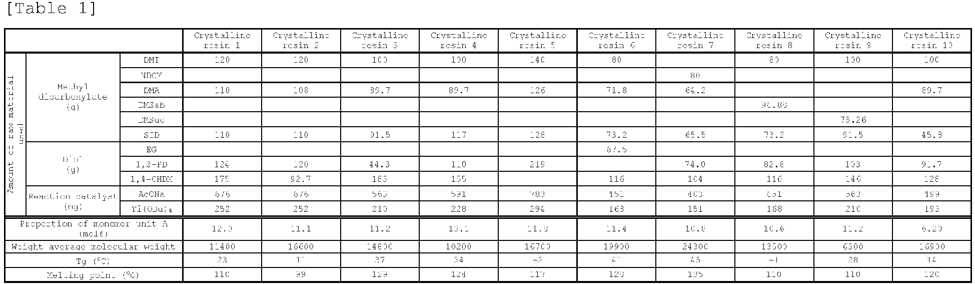

Notations in Table 1 mean the following.
DMT: Dimethyl terephthalate (manufactured by SK petrochemical)
NDCM: Dimethyl 2,6-naphthalenedicarboxylate (manufactured by Indorama Corporation)
DMA: Dimethyl adipate (manufactured by Tokyo Chemical Industry Co., Ltd.)
DMSeb: Dimethyl sebacate (manufactured by Tokyo Chemical Industry Co., Ltd.)
DMSuc: Dimethyl succinate (manufactured by Tokyo Chemical Industry Co., Ltd.)
SID: Dimethyl sodium 5-sulfoisophthalate (manufactured by Sanyo Chemical Industries, Ltd.)
EG: Ethylene glycol (manufactured by FUJIFILM Wako Pure Chemical Corporation)
1,3-PD: 1,3-Propanediol (manufactured by Tokyo Chemical Industry Co., Ltd.)
1,4-CHDM: 1,4-Cyclohexanedimethanol (manufactured by FUJIFILM Wako Pure Chemical Corporation)
AcONa: Sodium acetate (manufactured by FUJIFILM Wako Pure Chemical Corporation)
Ti(OBu)₄: Tetrabutyl orthotitanate (manufactured by Tokyo Chemical Industry Co., Ltd.)

### <Evaluation method>

### [Proportion of amount of substance of monomer unit derived from dimethyl sodium 5-sulfoisophthalate (monomer unit A) to total amount of substance of all monomer units in crystalline resin having hydrophilic group]

In a solvent prepared so as to contain deuterochloroform and deuterotrifluoroacetic acid at a mass ratio of 3 : 2, 10 mg of a crystalline resin having a hydrophilic group was dissolved, and measurement by proton NMR was performed by NMR using MR400 manufactured by Agilent Technologies, Inc. An integral value A of a peak derived from a proton directly bonded to an aromatic ring in a monomer unit derived from sodium 5-sulfoisophthalate (monomer unit A) was divided by the number of protons directly bonded to an aromatic ring present in the monomer unit A to calculate an amount of substance A, an integral value B1 of a peak derived from a proton directly bonded to an aromatic ring in a monomer unit derived from a dimethyl aromatic dicarboxylate not having the hydrophilic group (monomer unit B1) was divided by the number of protons directly bonded to an aromatic ring present in the monomer unit B1 to calculate an amount of substance B1, and an integral value B2 of a peak derived from a proton directly bonded to an alpha position of an ester in a monomer unit derived from a dimethyl aliphatic dicarboxylate not having the hydrophilic group (monomer unit B2) was divided by the number of protons directly bonded to an alpha position present in the monomer unit B2 to calculate an amount of substance B2. The amount of substance A was divided by 2 times the sum of the amount of substance A, the amount of substance B1, and the amount of substance B2 to obtain a value expressed in percentage (100 × amount of substance A/(2 × (amount of substance A + amount of substance B1 + amount of substance B2)), and this value was regarded as the proportion of the amount of substance of the monomer unit A to the total amount of substance of all monomer units in the crystalline resin having a hydrophilic group. Table 1 shows the results.

### [Measurement of weight average molecular weight]

The crystalline resin having a hydrophilic group was dissolved at a content of 0.1 mass% in dimethylformamide, and a calibration curve was prepared from standard polystyrene using a gel permeation chromatograph (GPC) method under the following conditions to determine the weight average molecular weight (Mw). Table 1 shows the results.

### [Measurement condition]

Apparatus: HLC-8320GPC (manufactured by Tosoh Corporation, detector integrated type)
Column: α-M × 2 columns (manufactured by Tosoh Corporation, 7.8 mm I.D. × 30 cm)
Eluent: Mixed solution of 60 mmol/L phosphoric acid + 50 mmol/L brominated lithium dimethylformamide
Flow rate: 1.0 mL/min, Column temperature: 40°C
Detector: RI detector
Standard substance: Polystyrene

### [Method of preparing sample for DSC and wide-angle X-ray measurement]

On a hot plate (Digital Hotplate NINOS ND-1 manufactured by AS ONE CORPORATION) heated to 70°C, a 10 mass% dispersion liquid of the crystalline resin having a hydrophilic group was heated and dried, and then dried under reduced pressure at 70°C with a vacuum dryer (VACUUM OVEN VOS-451SD manufactured by TOKYO RIKAKIKAI CO., LTD.). The obtained resin was pulverized to obtain a crystallized crystalline resin powder. The obtained crystalline resin powder was heated on a hot plate at 150°C for 10 minutes to obtain an amorphized resin powder.

### [Glass transition temperature]

A sample (5 to 10 mg) was precisely weighed, sealed in an aluminum pan, and heated using a DSC apparatus (DSC 7020 manufactured by Seiko Instruments Inc.) at 10°C/min from 30°C to 230°C and then cooled to 30°C with the cooling rate set to 150°C/min. The sample was heated again at 10°C/min to 230°C to obtain a DSC curve, from which the glass transition temperature (°C) was determined. Table 1 shows the results.

### [Measurement of melting point of crystalline resin having hydrophilic group (DSC)]

In an aluminum pan (GAA-0065 and GAA-0064 manufactured by Hitachi High-Tech Science Corporation), 5 mg of the crystalline resin powder was put, the temperature was changed from -60°C to 230°C, -30°C, and 230°C at a scanning speed of 10°C/min with a differential scanning calorimeter (DSC7020 manufactured by Hitachi High-Tech Science Corporation), and the peak top temperature of the melting point generated in the 1st run was regarded as the melting point of the crystalline resin having a hydrophilic group. Table 1 shows the results.

### [Confirmation of crystal (wide-angle X-ray measurement)]

Each crystalline resin powder or a resin powder obtained by amorphizing each crystalline resin at a temperature for a time described in Table 2, 4, or 5 was put on a glass plate, placed in a wide-angle X-ray measuring apparatus Mini Flex II (manufactured by Rigaku Corporation), and measured at 32 kV, 15 mA, and a scanning speed of 1°/min. Presence or absence of crystals of the resins according to Examples 1 to 18 and Comparative Examples 1 to 9 was confirmed from presence or absence of peaks around a diffraction angle 20 of 17° and 23°. Tables 2 to 5 show the measurement results.

### [Evaluation of solubility of crystalline resin having hydrophilic group]

### [Preparation of evaluation sample]

To 16 g of deionized water heated to 70°C with a hot stirrer (HS-7BHSD manufactured by AS ONE CORPORATION), 4.0 g of the crystalline resin having a hydrophilic group was added, and the resulting mixture was stirred until the solid contents were entirely dispersed. Thereafter, the heating was stopped and the mixture was allowed to cool to room temperature to prepare a 20 mass% dispersion liquid of the crystalline resin having a hydrophilic group. The prepared dispersion liquid of the crystalline resin having a hydrophilic group was applied onto a corona-treated surface of a PET film corona-treated on one side (FE2001 #25 manufactured by FUTAMURA CHEMICAL CO., LTD.) by gravure solid printing using a desktop gravure printing machine (K PRINTING PROOFER manufactured by Matsuo Sangyo Co., Ltd.). Thereafter, the resulting PET film was heated on a hot plate (Digital Hotplate NINOS ND-1 manufactured by AS ONE CORPORATION) to 90°C, held for 5 minutes, and thus dried to obtain a PET film having a coating containing the crystalline resin having a hydrophilic group. As for the crystalline resin 10, the prepared dispersion liquid was allowed to stand for 24 hours, a small amount of insoluble matter generated was removed, and the supernatant was applied to a PET film.

### [Amorphization treatment]

The PET film having a coating containing the crystalline resin having a hydrophilic group was placed on a hot plate heated to the temperature described in Table 2, 4, or 5, and heated for the time described in Table 2, 4, or 5. Thus, the crystalline resins 1 to 10 were amorphized to obtain evaluation samples according to Examples 1 to 18.

### [pH of neutral water]

Tap water was used as neutral water used for the following evaluation of removability. Tap water (neutral water) was collected in a beaker, and the pH was measured using a glass electrode under the following conditions. The pH was 7.44.
Temperature of tap water (neutral water): 23°C
Glass electrode: 9615S-10D (manufactured by HORIBA, Ltd.)
pH meter: F-72 (manufactured by HORIBA, Ltd.)

The above operation was performed after calibrating the pH and the glass electrode using a standard buffer (phthalate pH buffer) pH 4.01 (25°C) (manufactured by FUJIFILM Wako Pure Chemical Corporation), a standard buffer (neutral phosphate pH buffer) pH 6.86 (25°C) (manufactured by FUJIFILM Wako Pure Chemical Corporation), and a standard buffer (borate pH buffer) pH: 9.18 (25°C) (manufactured by FUJIFILM Wako Pure Chemical Corporation).

### [Evaluation of removability with neutral water]

### (Examples 1 to 17 and Comparative Examples 1 to 9)

Each of the evaluation samples (2 cm × 2 cm) according to Examples 1 to 17 and Comparative Examples 1 to 9 were attached to a slide glass (S2112 manufactured by Matsunami Glass Ind., Ltd., 76 mm × 26 mm) with a double-sided tape. The end of the slide glass was clipped, and the slide glass was suspended with the clip, and thus placed in a 500 mL beaker containing 400 mL of tap water (neutral water) having a temperature described in Tables 2 to 4 so that the PET film was entirely in water while the tap water was stirred with a magnetic stirrer. The time of completion of removal of the coating containing the crystalline resin having a hydrophilic group on the film was regarded as the deinking time. In a case where the coating was not removed even 120 minutes after placing in water, the evaluation result was described as "not released". Tables 2 to 4 show the evaluation results.

**[Table 2]**

| | Example 1 | Example 2 | Example 3 | Example 4 | Example 5 | Example 6 | Example 7 | Example 8 | Example 9 |
|---|---|---|---|---|---|---|---|---|---|
| Used resin | Crystalline resin 1 | Crystalline resin 2 | Crystalline resin 3 | Crystalline resin 4 | Crystalline resin 5 | Crystalline resin 6 | Crystalline resin 7 | Crystalline resin 8 | Crystalline resin 9 |
| Substrate | PET | PET | PET | PET | PET | PET | PET | PET | PET |
| Heating temperature (°C) | 150 | 110 | 150 | 150 | 150 | 150 | 150 | 120 | 120 |
| Heating temperature - melting point (°C) | 40 | 11 | 21 | 26 | 33 | 22 | 15 | 10 | 10 |
| Heating time (min) | 1 | 1 | 1 | 1 | 1 | 1 | 1 | 1 | 1 |
| X-ray peak | Absent | Absent | Absent | Absent | Absent | Absent | Absent | Absent | Absent |
| Removal temperature (°C) | 50 | 24 | 50 | 24 | 24 | 50 | 50 | 24 | 24 |
| Removal time (min) | 4 | 50 | 2 | 6 | 60 | 4 | 40 | 25 | 5 |

**[Table 3]**

| | Comparative Example 1 | Comparative Example 2 | Comparative Example 3 | Comparative Example 4 | Comparative Example 5 | Comparative Example 6 | Comparative Example 8 |
|---|---|---|---|---|---|---|---|
| Used resin | Crystalline resin 1 | Crystalline resin 2 | Crystalline resin 3 | Crystalline resin 4 | Crystalline resin 5 | Crystalline resin 6 | Crystalline resin 7 |
| Substrate | PET | PET | PET | PET | PET | PET | PET |
| Heating temperature (°C) | Absent | Absent | Absent | Absent | Absent | Absent | Absent |
| Heating time (min) | Absent | Absent | Absent | Absent | Absent | Absent | Absent |
| X-ray peak | Present | Present | Present | Present | Present | Present | Present |
| Removal temperature (°C) | 50 | 24 | 50 | 24 | 24 | 50 | 50 |
| Removal time (min) | 60 | Not released | Not released | Not released | Not released | Not released | Not released |

**[Table 4]**

| | Example 1 | Example 10 | Example 11 | Example 12 | Example 13 | Example 14 | Example 15 | Example 16 | Example 17 |
|---|---|---|---|---|---|---|---|---|---|
| Used resin | Crystalline resin 1 | Crystalline resin 1 | Crystalline resin 1 | Crystalline resin 1 | Crystalline resin 1 | Crystalline resin 1 | Crystalline resin 1 | Crystalline resin 1 | Crystalline resin 1 |
| Substrate | PET | PET | PET | PET | PET | PET | PET | PET | PET |
| Heating temperature (°C) | 150 | 150 | 150 | 120 | 130 | 140 | 160 | 170 | 180 |
| Heating temperature - melting point (°C) | 40 | 40 | 40 | 10 | 20 | 30 | 50 | 60 | 70 |
| Heating time (min) | 1 | 3 | 10 | 1 | 1 | 1 | 1 | 1 | 1 |
| X-ray peak | Absent | Absent | Absent | Absent | Absent | Absent | Absent | Absent | Absent |
| Removal temperature (°C) | 50 | 50 | 50 | 50 | 50 | 50 | 50 | 50 | 50 |
| Removal time (min) | 4 | 10 | 10 | 15 | 20 | 4 | 4 | 6 | 6 |

### (Example 18 and Comparative Example 10)

The PET film was placed so as to be entirely in water at 70°C in the same manner as in Example 1. In both of the evaluation samples after a lapse of 120 minutes, the coating was not removed. Each evaluation sample was taken out, and the surface was rubbed with a rubber glove to evaluate the ink releasability. Table 5 shows the evaluation results.

**[Table 5]**

| | Example 18 | Comparative Example 9 |
|---|---|---|
| Used resin | Crystalline resin 10 | Crystalline resin 10 |
| Substrate | PET | PET |
| Heating temperature (°C) | 170 | Absent |
| Heating time (min) | 10 | Absent |
| X-ray peak | Little | Present |
| Removal temperature (°C) | 70 | 70 |
| Removal time (min) | Coating was removed | Coating remained |

## Claims

1. A method for improving dispersibility of a crystalline resin having a hydrophilic group into neutral water, the method comprising an amorphization step of amorphizing a crystalline resin having a hydrophilic group.

2. The method according to claim 1, wherein the crystalline resin having a hydrophilic group has a melting point of 70°C or more and 200°C or less, the melting point represented by Tm.

3. The method according to claim 1 or 2, wherein the crystalline resin having a hydrophilic group has a glass transition temperature of -10°C or more and 180°C or less.

4. The method according to any one of claims 1 to 3, wherein the crystalline resin having a hydrophilic group has a content of the hydrophilic group of 0.4 mmol/g or more and 3.0 mmol/g or less.

5. The method according to any one of claims 1 to 4, wherein the crystalline resin having a hydrophilic group is a crystalline water-soluble resin that includes a monomer unit A having a hydrophilic group and a monomer unit B not having the hydrophilic group.

6. The method according to any one of claims 1 to 5, wherein a molar ratio of the monomer unit A to the monomer unit B (the monomer unit A/the monomer unit B) in the crystalline resin having a hydrophilic group is 10/90 or more and 70/30 or less.

7. The method according to any one of claims 1 to 6, wherein the crystalline resin having a hydrophilic group has a weight average molecular weight of 1000 or more and 80000 or less.

8. The method according to any one of claims 1 to 7, wherein the amorphization step includes a heat treatment step of heat-treating the crystalline resin having a hydrophilic group.

9. The method according to claim 8, wherein in the heat treatment step, the crystalline resin having a hydrophilic group is heat-treated under a non-shear condition.

10. The method according to claim 8 or 9, wherein the crystalline resin having a hydrophilic group is heat-treated in the heat treatment step at a temperature of Tm + 10°C or more and Tm + 70°C or less, Tm representing the melting point of the crystalline resin having a hydrophilic group.

11. The method according to any one of claims 8 to 10, wherein the crystalline resin having a hydrophilic group is heat-treated in the heat treatment step at a temperature of 110°C or more and 220°C or less.

12. The method according to any one of claims 1 to 11, wherein the crystalline resin having a hydrophilic group has one or more hydrophilic groups selected from the group consisting of anionic groups.

13. The method according to any one of claims 1 to 12, wherein the crystalline resin having a hydrophilic group is a water-soluble polyester resin.

14. The method according to any one of claims 1 to 13, wherein the crystalline resin having a hydrophilic group is a used resin.

15. The method according to any one of claims 1 to 14, wherein the crystalline resin having a hydrophilic group is contained in a printed matter, an adhesive, a pressure-sensitive adhesive, or a coating.

16. A method for dispersing a crystalline resin having a hydrophilic group into neutral water, the method comprising:
improving dispersibility of a crystalline resin having a hydrophilic group into neutral water by the method according to any one of claims 1 to 15; and
then dispersing the crystalline resin having a hydrophilic group into neutral water.

17. A method for removing a coating, comprising the method according to any one of claims 1 to 16.
